# EUROPEAN PATENT APPLICATION

(11) **EP 4 276 993 A1**
(43) Date of publication of application: **15.11.2023**
(21) Application number: 22885170.5
(22) Date of filing: 29.06.2022
(51) Int. Cl.: H01M 50/244, H01M 50/289

(54) **BATTERY BOX, BATTERY, AND ELECTRIC APPARATUS**

(30) Priority: 01.11.2021 CN 202122647618 U
(71) Applicant: Contemporary Amperex Technology Co., Limited, Ningde, Fujian 352100 (CN)
(72) Inventor: TANG, Zhixiang, Ningde, Fujian 352100 (CN); WANG, Qing, Ningde, Fujian 352100 (CN)
(74) Representative: Ran, Handong
(86) International application number: PCT/CN2022/102396
(87) International publication number: WO 2023/071265

(57) **Abstract**

The present application relates to a battery box, a battery, and an electric apparatus. The battery box (10) is affixed to an external structure by means of mutual connection between a first fixing member (142) and a second fixing member. A mounting channel (131) is provided inside a frame (13), a first connecting member (1321b) is located in the mounting channel (131) using a connecting body (141) as a mounting base, so that a mounting point of the battery box (10) to the external structure is located on the frame (13), and there is no need to provide an additional mounting structure outside the frame (13), thereby reducing the occupied space when the battery box (10) is mounted.

## Description

### CROSS REFERENCE TO RELATED APPLICATION

The present application claimed priority of Chinese Patent Application, with Application No. 202122647618.5, filed on November 1, 2021, entitled "a battery case, a battery and an electrical device"; the content of which is incorporated herein the present application by reference.

### TECHNICAL FIELD

The present application relates to the technical field of a mounting structure of a battery case, and more particularly to a battery case, a battery and an electrical device.

### BACKGROUND

In commercial vehicles or other large electrical devices, battery packs are generally have larger space occupation and it is difficult to store and mount the battery packs. Therefore, it is necessary to store and mount the battery packs into the electrical device through the battery case.

In some conditions, a mounting structure is extended outward at the frame of the battery case to achieve the connection and fixation between the battery case and the electrical device. However, the mounting structure makes all mounting points of the battery case all located outside the battery case, the space occupation during the mounting of the battery case is increased, and it is not conducive to improve the space utilization rate of mounting of the battery case.

### SUMMARY

An object of the present application is to provide a battery case, a battery and an electrical device, in order to solve the problem that the mounting of the battery case occupies a larger space.

In a first aspect, the present application provides a battery case, and the battery case includes:
a frame provided therein with a mounting channel, and the frame is provided with a connecting hole configured to connect interior and exterior of the mounting channel;
a connecting assembly including a connecting main body and a first fixing member; and the connecting main body is inserted into the mounting channel, and the first fixing member is fixedly arranged on the connecting main body; and
a second fixing member connected with the first fixing member by the connecting hole, to fix the battery case to an external structure.

As the mounting channel is formed inside the frame, when the battery case is connected to the external structure, the mounting point is located on the frame. As a result, there is no need to provide a mounting structure extended outwardly, which reduces the space occupation during the mounting of the battery case.

In addition, due that the connecting main body is inserted into the mounting channel, and the first fixing member arranged on the connecting main body corresponding to the connecting hole on the frame, the connection between the first fixing member and the second fixing member is achieved. Therefore, by adjusting the position of the connecting hole on the frame and coordinating with the insertion position of the connecting main body, the position of the battery case and the external structure is flexibly adjusted, and the mounting is more flexible.

In some embodiments, the frame includes a frame body and a cap body, the frame body is in a rectangular shape provided with an opening at one end, and the cap body is detachably covered at the opening; the frame body includes four side plates, and the four side plates are connected in an end-to-end manner, at least one of the four side plates is hollow, and at least a part of an inner cavity of the at least one of the four side plates forms the mounting channel.

When a plurality of mounting channels are formed in the four side plates, each mounting channel is used to connect the battery case to the external structure, therefore the connection between the battery case and the external structure is more stable.

In some embodiments, an edge of each side plate matched with the cap body is provided with a glue groove, and the glue groove is configured for filling a sealant to seal a gap between the cap body and the frame body.

In some embodiments, a side plate provided with the mounting channel includes a first mounting sub-plate located at a top of the side plate facing the opening; and the connecting hole is arranged on the first mounting sub-plate, and the first mounting sub-plate is constructed as one of channel walls of the mounting channel.

Due that the first mounting sub-plate is a part of the side plate, the fixed connection between the first fixing member and the second fixing member is achieved by the first mounting sub-plate, such that the connection structure is simpler and easier to be operated.

In some embodiments, each side plate further includes a first connecting plate, a second connecting plate, and a limiting portion; the first connecting plate and the second connecting plate are connected with opposite sides of the first mounting sub-plate, and the limiting portion protrudes to form a surface facing between the first connecting plate and the second connecting plate, and the limiting portion, the first mounting sub-plate, the first connecting plate, and the second connecting plate are jointly constructed to form the mounting channel.

The connecting main body is supported on the limiting portion, such that the insertion of the connecting main body into the mounting channel is more stable, therefore the connection between the first fixing member and the second fixing member is more smooth.

In some embodiments, a side plate provided with the mounting channel includes a second mounting sub-plate located at a bottom of the side plate facing away from the opening; and the connecting hole is arranged on the second mounting sub-plate, and the second mounting sub-plate is constructed as one of channel walls of the mounting channel.

Similar to the first mounting sub-plate, as the second mounting sub-plate is a part of the side plate, the fixed connection between the first fixing member and the second fixing member is achieved by the second mounting sub-plate, such that the connection structure is simpler and easier to be operated.

In some embodiments, each side plate is hollow and at least a part of the inner cavity of each side plate forms the mounting channel. The four side plates form four independent mounting channels that are respectively connected to the external structure, such that the connection between the battery case and the external structure is more stable.

In some embodiments, each side plate is provided with a head and a tail, the head is opposite to the tail in each side plate, each mounting channel is provided with an insertion end and a connection end, and the insertion end and the connection end of each mounting channel are sequentially arranged along an insertion direction; the insertion end is located at the head of the side plate where the insertion end is located, and the connection end is located at the tail of the side plate where the connection end is located; and when two adjacent side plates are jointed, the connection end of one of the two adjacent side plates is abutted against an outer surface of the insertion end of other one of the two adjacent side plates, and the insertion end is maintained to be exposed.

Due that the insertion end of each mounting channel is maintained to be exposed, which is more convenient to insert the connecting main body into each mounting channel during mounting, such that the mounting process is more smooth.

In some embodiments, the mounting channel is provided with a reinforcing plate extended along an insertion direction and is arranged to be parallel to the connecting main body. The reinforcing plate improved the overall stiffness of the side plate, such that the overall structural stability of the battery case is higher.

In a second aspect, a battery is provided, which includes the battery case mentioned above.

In a third aspect, an electrical device is provided, which includes the battery mentioned above, and the battery is configured for providing electrical energy.

In the battery case, the battery, and the electrical device mentioned above, the fixation of the battery case with the external structure is achieved by the first fixing member and the second fixing member connected to each other. In addition, due that the mounting channel is arranged inside the frame, the first connecting member is located inside the mounting channel using the connecting main body as the mounting foundation, so that the mounting point of the battery case to the external structure is located on the frame, there is no need to arrange additional mounting structure outside the frame, the space occupation during the mounting of the battery case is reduced; and the connecting main body is inserted into the mounting channel, which allows for flexible adjustment the position of the mounting point on the frame, such that the mounting of the battery case is more flexible.

The above description is only a summary of the technical solution of the present application. In order to have a clearer understanding of the technical means of the present application, it can be implemented in accordance with the content of the specification. In order to make the above and other purposes, features, and advantages of the present application more obvious and understandable, the specific implementation methods of the present application are hereby listed.

### BRIEF DESCRIPTION OF THE DRAWINGS

In order to provide a clearer explanation of the technical solution of the embodiments of the present application, a brief introduction will be given to the accompanying drawings required in the embodiments of the present application. It is obvious that the accompanying drawings described below are only some embodiments of the present application. For those skilled in the art, other accompanying drawings can be obtained based on the drawings without any creative effort.
FIG. 1 is a structural schematic view of a vehicle according to an embodiment of the present application;
FIG. 2 is an exploded schematic view of a battery according to an embodiment of the present application;
FIG. 3 is a structural schematic view of a battery case in an embodiment of the present application;
FIG. 4 is a cross-sectional view of the battery case shown in FIG. 1;
FIG. 5 is a locally enlarged view of a part A in FIG. 4;
FIG. 6 is a side schematic view of a side plate in the battery case shown in FIG. 1; and
FIG. 7 is a cross-sectional view of along a B-B direction in FIG. 6.

1000-vehicle; 100-battery; 200-controller; 300-motor; 10-battery case; 20-battery cell; 11-first portion; 12-seconortion; 13-frame; 14-connecting assembly; 131-mounting channel; 132-frame body; 133-reinforcing plate; 141-connecting main body; 142-first fixing member; 1321-side plate; 1322-glue groove; 1321a-first mounting sub-plate; 1321b-first connecting plate; 1321c-second connecting plate; 1321d-limiting portion; 1321e-second mounting sub-plate; 1321-head; 1321g-tail.

### DETAILED DESCRIPTION

The following will provide a detailed description of the embodiments of the technical solution of the present application in conjunction with the accompanying drawings. The following embodiments are only used to provide a clearer explanation of the technical solution of the present application, and therefore are only examples and cannot be used to limit the scope of protection of the present application.

Unless otherwise defined, all technical and scientific terms used in the present application have the same meanings as those commonly understood by those skilled in the art of the present application; the terms used in the present application are only for the purpose of describing specific embodiments and are not intended to limit the present application. The terms "including" and "having" in the description and claims of the present application, as well as the accompanying drawings, and any variations thereof, are intended to cover non exclusive inclusion.

In the description of the embodiments of the present application, the technical terms "first", "second", etc. are only used to distinguish different objects, and cannot be understood as indicating or implying relative importance or implying the quantity, specific order, or primary and secondary relationship of the indicated technical features. In the description of the embodiments of the present application, the meaning of "a plurality of" refers to two or more, unless otherwise specified.

Referring to "embodiments" in the present application means that specific features, structures, or characteristics described in conjunction with the embodiments can be included in at least one embodiment of the present application. The phrase appearing in various positions in the specification does not necessarily refer to the same embodiment, nor is it an independent or alternative embodiment that is mutually exclusive with other embodiments. Those skilled in the art explicitly and implicitly understand that the embodiments described in the present application can be combined with other embodiments.

In the description of the embodiments of the present application, the term "and/or" is only a description of the association relationship of the associated object, indicating that there can be three types of relationships, such as A and/or B, which can indicate the presence of A alone, the presence of A and B simultaneously, and the presence of B alone. In addition, the character '/' in the present application generally indicates that the associated object is an 'or' relationship.

In the description of the embodiments of the present application, the term "a plurality of" refers to two or more (including two), similarly, "a plurality of groups" refers to two or more groups (including two), and "a plurality of sheets" refers to two or more sheets (including two).

In the description of the embodiments of the present application, the orientation or positional relationship indicated by the technical terms "center", "longitudinal", "horizontal", "length", "width", "thickness", "up", "bottom", "front", "back", "left", "right", "vertical", "top", "bottom", "inside", "outside", "clockwise", "counterclockwise", "axial", "radial", "circumferential", etc. are based on the orientation or positional relationship shown in the attached drawings, and are only for the convenience of describing and simplifying the embodiments of the present application, rather than indicating or implying that the device or component referred to must have a specific orientation, be constructed and operated in a specific orientation. Therefore, it cannot be understood as a limitation on the embodiments of the present application.

In the description of the embodiments of the present application, unless otherwise specified and limited, the technical terms "mounting", "connection", "connecting", "fixing" and other terms should be broadly understood, for example, they can be fixed connections, detachable connections, or integrated. It can also be a mechanical connection or an electrical connection. It can be directly connected or indirectly connected through an intermediate medium, which can be the internal connection between two components or the interaction relationship between two components. For those skilled in the art, the specific meanings of the above terms in the embodiments of the present application can be understood based on specific situations.

Currently, based on the development of the market situation, the application of power batteries is becoming increasingly widespread. Power batteries are not only used in energy storage power systems such as water power, firepower, wind power, and solar power station, etc., but also widely used in electric vehicles such as electric bicycles, electric motorcycle, and electric vehicles, etc., and military equipment, aerospace and other fields. The application field of power batteries is constantly expanding, and the market demand is also constantly expanding.

When power batteries are applied to large electrical devices such as electric vehicles, the required battery packs are often larger and difficult to be stored and mounted. Therefore, it is necessary to store and mount the battery pack by the battery case.

In some cases, the battery case generally adopts a mounting structure that extends outward on the frame, and the mounting structure is provided with a T-shaped bushing nut on the mounting structure. When the battery case is connected to the electrical main body, the battery case is fixed to the electrical main body by matching and connecting between a bolt and a T-shaped bushing nut, therefore, the mounting of the battery case on the electrical main body is achieved.

However, the mounting method of the battery case mentioned above requires a mounting structure extending outward on the frame of the battery case, and the mounting point is located on the mounting structure, that is, the mounting point is located outside the frame of the battery case. This method has the following problems: firstly, the mounting structure increases the frame of the battery case, therefore the overall space occupancy of the battery case is increased; secondly, the mounting point is located on the mounting structure, that is, the mounting point is located outside the frame of the battery case, which allows the battery case to only be fixedly connected to the external structure by the mounting structure, such that the mounting method of the battery case is simple.

Based on the above considerations, in order to solve the problem of large space occupation rate of the mounting structure of the battery case in the prior art, the applicant has designed a battery case provided with mounting point located on the frame. By forming a mounting channel inside the frame, and connecting the connecting assembly inserted into the mounting channel with the second fixing member, the fixed connection between the battery case and the external structure is achieved.

In the battery case mentioned above, the connecting main body is inserted into the mounting channel and connected to the second fixing member by a first fixing member fixed on the connecting main body. As a result, the mounting point is located on the frame, which does not need to design a mounting structure that extends out of the frame, therefore the space occupation during the mounting of the battery case is reduced.

It should be noted that the present application embodiment provides an electrical device using the battery case as a mounting structure for the battery pack, the electrical device can be, but is not limited to, an electric vehicle. For the convenience of explanation, the following embodiment takes the application of a battery case in a vehicle as an example.

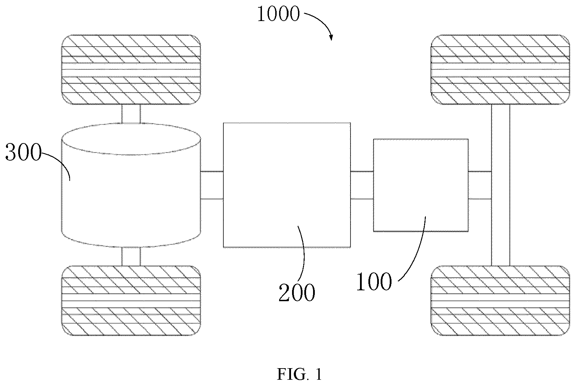

As shown in FIG. 1, which is a structural schematic view of the vehicle 1000 provided in some embodiments of the present application. The vehicle 1000 is a fuel powered vehicle, a gas powered vehicle, or a new energy vehicle. The new energy vehicle can be a pure electric vehicle, a hybrid electric vehicle, or an extended range vehicle, etc. The interior of vehicle 1000 is provided with a battery 100, the battery 100 is mounted at the bottom, head, or tail of the vehicle 1000. The battery 100 is used for the power supply of vehicle 1000, for example, the battery 100 is served as the operating power supply of the vehicle 1000. The vehicle 1000 further includes a controller 200 and a motor 300, the controller 200 is used to control the battery 100 to supply power to the motor 300. For example, the battery 100 is used for the starting, navigation, and driving power requirements of the vehicle 1000.

In some embodiments of the present application, the battery 100 can not only serve as the operating power source for the vehicle 1000, but also as the driving power source for the vehicle 1000, which can replace or partially replace fuel or natural gas to provide driving power for the vehicle 1000.

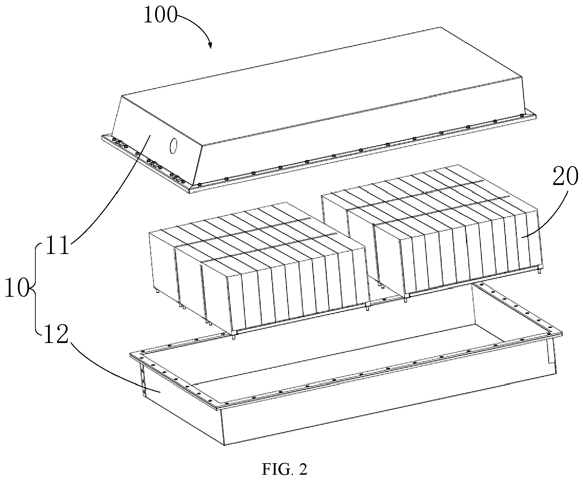

As shown in FIG. 2, which is an exploded view of a battery 100 provided in some embodiments of the present application. The battery 100 includes a battery case 10 and battery cells 20, the battery cells 20 are accommodated within the battery case 10. In the embodiment, the battery case 10 is used to provide an accommodating space for the battery cells 20, and the battery case 10 can adopt various structures. In some embodiments, the battery case 10 includes a first portion 11 and a second portion 12, the first portion 11 is engaged with the second portion 12, and the first portion 11 and the second portion 12 are jointly defined the accommodating space for accommodating the battery cells 20. In an embodiment, the second portion 12 is a hollow structure with an opening at one end, the first portion 11 is a plate-like structure, and the first portion 11 covers the opening side of the second portion 12 to jointly define the accommodating space between the first portion 11 and the second portion 12. In another embodiment, the first portion 11 and the second portion 12 are hollow structures with openings on one side, and the opening side of the first portion 11 covers the opening side of the second portion 12. In further embodiment, the case 10 formed by the first portion 11 and the second portion 12 has various shapes, such as a cylinder, a rectangle, etc.

In the battery 100, a plurality of battery cells 20 can be provided, the plurality of battery cells 20 are connected in series, in parallel, or in mixed method, where connected in mixed method refers to both connected in series and connected in parallel among the plurality of battery cells 20. The plurality of battery cells 20 are directly connected in series, in parallel, or in mixed method, and then the whole composed of the plurality of battery cells 20 is accommodated in the case 10; in the embodiment, the battery 100 is further in the form of a battery module composed of the plurality of battery cells 20 that are first connected in series, in parallel, or in mixed method, and a plurality of battery modules are then connected in series, in parallel, or in mixed method to form a whole and accommodated in the case 10. In an embodiment, the battery 100 further includes other structures, for example, the battery 100 further includes a busbar component for achieving electrical connection between the plurality of battery cells 20.

In the embodiment, each battery cell 20 is a secondary battery or a primary battery; the battery cell 20 can also be a lithium sulfur battery, a sodium ion battery, or a magnesium ion battery, which is not limited herein. The battery cell 20 is in a cylindrical, a flat, a rectangular, or other shapes.

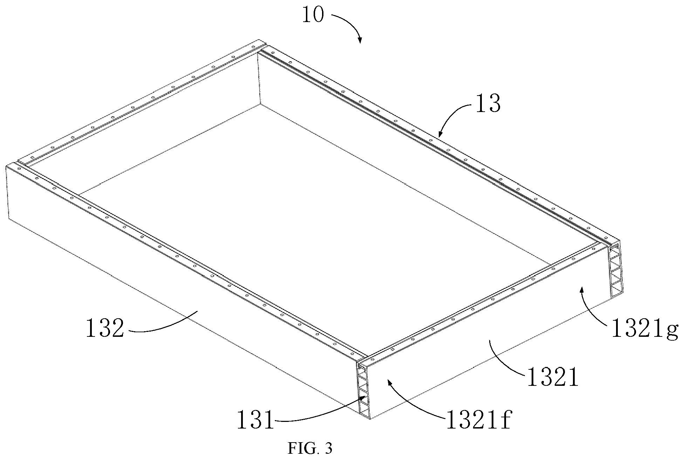

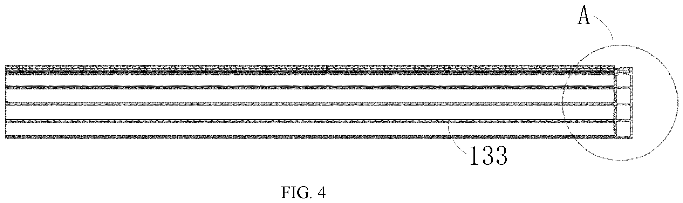

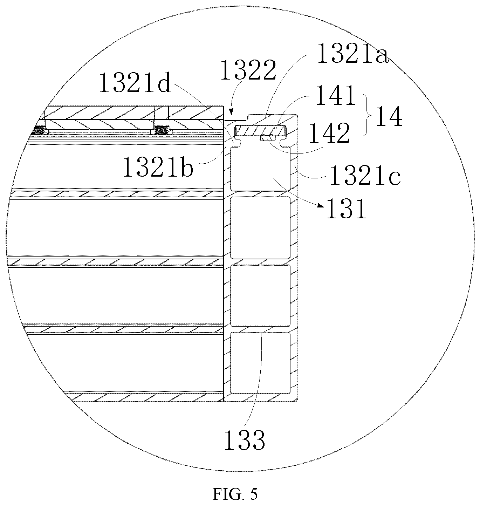

According to some embodiments of the present application, FIG. 3 shows a structural schematic view of the battery case in one embodiment of the present application, FIG. 4 shows a side sectional view of the battery case in one embodiment of the present application, and FIG. 5 shows a partially enlarged view at a part A in FIG. 4. For the convenience of description, the attached drawings only show the structures related to the embodiments of the present application.

As shown in FIGS. 3 to 5, an embodiment of the present application provides a battery case 10, and the battery case 10 includes a frame 13, a connecting assembly 14 and a second fixing member (not shown in the figures). In the embodiment, the frame 13 is provided therein with a mounting channel 131, and the frame 13 is provided with a connecting hole (not shown in the figures) configured to connect interior and exterior of the mounting channel 131. The connecting assembly 14 includes a connecting main body 141 and a first fixing member 142, the connecting main body 141 is inserted into the mounting channel 131, and the first fixing member 142 is fixedly arranged on the connecting main body 141. The second fixing member is connected to the first fixing member 142 by the connecting hole, so as to fix the battery case 10 to the external structure.

In the specific embodiment, when the first fixing member 142 is inserted into the mounting channel 131 along with the connecting main body 141, there are three positions between the first fixing member 142 and the connecting hole.

Firstly, the first fixing member 142 is partially extended out of the connecting hole, and at this time, the second fixing member is connected to the part of the first fixing member 142 that is exposed outside the connecting hole to achieve the fixation of the battery case 10 with the external structure.

Secondly, the first fixing member 142 is partially accommodated in the connecting hole, and at this time, the second fixing member extends into the connecting hole and is connected to the first fixing member 142 located in the connecting hole to achieve the fixation of the battery case 10 with the external structure.

Thirdly, the first fixing member 142 is fully accommodated in the mounting channel 131 and faces the connecting hole, and at this time, the second fixing member extends through the connecting hole into the mounting channel 131 and is connected to the first fixing member 142 to achieve the fixation of the battery case 10 with the external structure.

In the specific embodiment, the connecting main body 141 is constructed as a connecting plate, the first fixing member 142 is constructed as a T-shaped bushing nut connected to the connecting plate, and the second fixing member is constructed as a connecting bolt matched with the T-shaped bushing nut. When the connecting assembly 14 is inserted into the mounting channel 131, the T-shaped bushing nuts and the connecting holes are arranged one by one correspondingly. The connecting bolts protrude through the vehicle frame and the connecting holes in turn and are fixedly connected with the T-shaped bushing nuts, so as to realize the fixed connection between the battery case 10 and the vehicle frame.

In addition, the T-shaped bushing nut is inserted into the mounting channel 131 by the connecting plate and connected to the connecting bolt through a connecting hole. Therefore, the position where the connecting hole is located can be adjusted according to the actual situation. For example, when the battery case 10 needs to be mounted on the vehicle frame, the connecting hole is provided at the bottom of the frame 13, and the mounting point is located at the bottom of the frame 13. When the battery case 10 needs to be mounted to the vehicle frame in a lifted manner, the connecting hole is arranged at the top of frame 13, and the mounting point is located at the top of frame 13. Therefore, the mounting point of the battery case 10 are flexibly adjusted to have a plurality of mounting methods that can meet the different mounting needs of users.

In some embodiments, the frame 13 includes a frame body 132 and a cap (not shown in the figures). The frame body 132 is in a rectangular shape with an opening at one end, and the cap is detachably covered at the opening. The frame body 132 includes four side plates 1321, which are connected in an end-to-end manner, and at least one side plate 1321 is hollow and at least a part of the inner cavity of the side plate 1321 forms the mounting channel 131.

In the specific embodiment, the four side plates 1321 connected in an end-to-end manner are all arranged as hollow structures, and at least a part of the inner cavity of each side plate 1321 forms the mounting channel 131. Therefore, four independent mounting channels 131 are formed inside the frame 13, and one or more of the four independent mounting channels 131 re selected for connection. When the four mounting channels 131 are inserted into the connecting main body 141 and fixedly connected by the first fixing member 142 and the second fixing member respectively, which can ensure that the connection between the battery case 10 and the frame is more stable.

Furthermore, an edge of each side plate 1321 matched with the cap body is provided with a glue groove 1322, and the glue groove 1322 is used to fill the sealant to seal the gap between the cap body and the frame body 132. When the battery case 10 is mounted to the vehicle frame in a lifted manner, the connecting hole is provided at the top of the frame 13, and the vehicle frame is connected to the top of the frame 13 to achieve a fixed connection between the vehicle frame and the battery case 10. The connection between the cap body and the frame body 132, as well as the sealing of the battery case 10, are affected. Therefore, sealant is filled into the glue groove 1322 to ensure the sealing of the battery case 10.

In some embodiments, the side plate 1321 provided with the mounting channel 131 includes a first mounting sub-plate 1321a located at a top of the side plate 1321 facing the opening; and the connecting hole is arranged on the first mounting sub-plate 1321a, and the first mounting sub-plate 1321a is constructed as one of channel walls of the mounting channel 131.

In the specific embodiment, the four side plates 1321 connected in an end-to-end manner all include the first mounting sub-plate 1321a, the first mounting sub-plate 1321a is located at the top of the side plate 1321 and a connecting hole is provided on the first mounting sub-plate 1321a. When the battery case 10 is mounted to the vehicle frame in a lifted manner, the first mounting sub-plate 1321a is in contact with the vehicle frame and is fixedly connected by the first fixing member 142 and the second fixing member.

Furthermore, the side plate 1321 further includes a first connecting plate 1321b, a second connecting plate 1321c, and a limiting portion 1321d. In the embodiment, the first connecting plate 1321b and the second connecting plate 1321c are connected to the opposite sides of the first mounting sub-plate 1321a, and the limiting portion 1321d protrudes to form a surface facing between the first connecting plate 1321b and the second connecting plate 1321c. The limiting portion 1321d, the first mounting sub-plate 1321a, the first connecting plate 1321b, and the second connecting plate 1321c are jointly constructed to form the mounting channel 131.

Furthermore, two limiting portions 1321d are respectively located on the first connecting plate 1321b and the second connecting plate 1321c, and the two limiting portions 1321d are jointly formed a support surface parallel to the first mounting sub-plate 1321a. When the connecting main body 141 is inserted into the mounting channel 131, the connecting main body 141 is supported on the support surface formed by two limiting portions 1321d. When the battery case 10 is mounted to the vehicle frame in a lifted manner, the connecting main body 141 is supported on the limiting portion 1321d and connected to the first mounting sub-plate 1321a, therefore the connection between the first fixing member 142 and the second fixing member is facilitated.

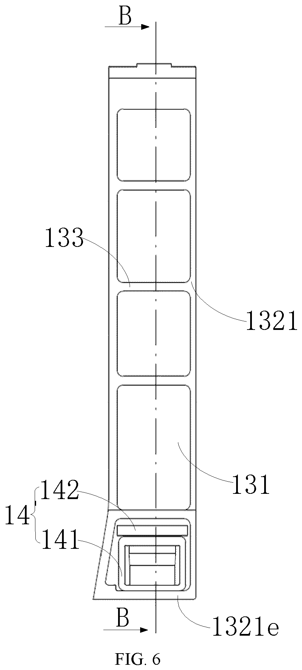

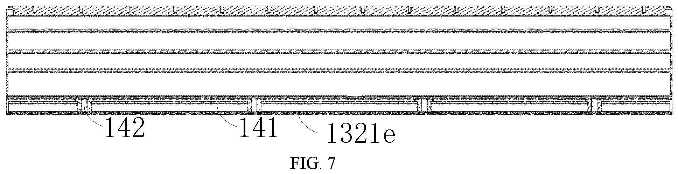

FIG. 6 shows a side schematic view of the battery case in an embodiment of the present application, and FIG. 7 shows a cross-sectional view in a B-B direction in FIG. 6.

As shown in FIGS. 6 and 7. In some embodiments, the side plate 1321 provided with the mounting channel 131 includes a second mounting sub-plate 1321e located at the bottom facing away from the opening of the side plate 1321. The connecting hole is arranged on the second mounting sub-plate 1321e, and the second mounting sub-plate 1321e is constructed as one of the channel walls of the mounting channel 131.

In the specific embodiment, the four side panels 1321 connected in an end-to-end manner all include the second mounting sub-plate 1321e, and the second mounting sub-plate 1321e is located at the bottom of the side panel 1321 and a connecting hole is provided on the second mounting sub-plate 1321e. When the battery case 10 is mounted on the vehicle frame, the battery case 10 is directly placed on the vehicle frame, so that the second mounting sub-plate 1321e is in contact with the vehicle frame and is fixedly connected by the first fixing member 142 and the second fixing member.

Furthermore, each side plate 1321 is hollow, and at least a part of the inner cavity of each side plate 1321 forms the mounting channel 131. Taking the embodiment as an example, all four side panels 1321 are hollow. Therefore, four independent mounting channels 131 are formed inside the frame 13, and at least four mounting point is formed, therefore the connection between the battery case 10 and the vehicle frame is more stable.

In some embodiments, each side plate 1321 is provided with a head 1321f and a tail 1321g, the head 1321f of each side plate 1321 is arranged opposite to the tail 1321g, each mounting channel 131 is provided with an insertion end and a connection end, and the insertion end and the connection end of each mounting channel 131 are sequentially arranged along an insertion direction. The insertion end is located at the head 1321f of the side plate 1321 where the insertion end is located, and the connection end is located at the tail 1321g of the side plate 1321 where the connection end is located. When two adjacent side panels 1321 are jointed, the connection end of one of the two adjacent side panels 1321 is connected to the outer surface of the insertion end of the other one of the two adjacent side panels 1321, while the insertion end is maintained to be exposed.

In the embodiment, the four side plates 1321 are jointed end-to-end at a 90° to form a rectangular shape. The insertion end of each side plate 1321 is connected to the outside of the side plate 1321. Therefore, the connecting main body 141 can be inserted into the four mounting channels 131 respectively, thereby the connection of all four side plates 1321 to the frame is achieved and the stability of the connection is improved.

In addition, the mounting channel 131 is provided with a reinforcing plate 133, the reinforcing plate 133 extends along the insertion direction and is arranged parallel to the connecting main body 141. The reinforcing plate 133 can improve the overall stiffness of the side plate 1321, so that the overall structural stability of the battery case 10 is higher.

Based on the same concept as the battery case 10 mentioned above, the present application further provides an electrical device, including the battery case 10 mentioned above.

In some embodiments of the present application, different mounting methods are selected based on actual situations. When the battery case 10 is required to be mounted to the vehicle frame in a lifted manner, the connecting main body 141 is inserted into the mounting channel 131 and supported on the limiting portion 1321d, such that the connecting main body 141 is connected to the first mounting sub-plate 1321a. The first mounting sub-plate 1321a is provided with the connecting hole, and the first fixing member 142 fixed on the connecting main body 141 can be connected to the second fixing member through the connecting hole, so as to connect the battery case 10 to the vehicle frame. In addition, when the connection between the battery case 10 and the frame fails, maintenance can be carried out by replacing the connecting main body 141, which saves maintenance cost.

When the battery case 1 is required to be mounted on the vehicle frame, the connecting main body 141 is inserted into the mounting channel 131, so that the connecting main body 141 is connected to the second mounting sub-plate 1321e. The second mounting sub-plate 1321e is provided with the connecting hole, and the first fixing member 142 fixed on the connecting main body 141 can be connected to the second fixing member through the connecting hole, so as to connect the battery case 10 to the vehicle frame. Similarly, this mounting method can further be maintained by replacing the connecting main body 141, which saves maintenance cost.

The battery case 10 and the electrical device in the above embodiments have at least the following advantages.

The mounting channel 131 is formed inside the frame 13, and after the connecting main body 141 is inserted into the mounting channel 131, the first fixing member 142 fixed on the connecting main body 141 is connected to the second fixing member to achieve the fixation of the battery case 10 and the vehicle frame, so that the mounting point between the battery case 10 and the vehicle frame is located on the frame 13, there is no need to arrange an additional mounting structure extending out of the frame 13, and the space occupancy rate of the battery case 10 during mounting is reduced.

The connecting main body 141 is inserted into the mounting channel 131, which facilitates maintenance and replacement of the connecting main body 141, therefore the maintenance cost for the battery case 10 is saved.

The mounting point between the battery case 10 and the vehicle frame depends on the position where the connecting hole is located. Therefore, the mounting point of the battery case 10 can be adjusted by adjusting the position where the connecting hole is located on the frame 13, so that the battery case 10 meets various mounting methods.

Finally, it should be noted that the above embodiments are only used to illustrate the technical solution of the present application and not to limit the above embodiments. Although the present application has been described in detail with reference to the aforementioned embodiments, those skilled in the art should understand that they can still modify the technical solutions recorded in the aforementioned embodiments, or equivalently replace some or all of the technical features. These modifications or substitutions do not separate the essence of the corresponding technical solutions from the scope of the technical solutions of the various embodiments of the present application, and they should all be covered within the scope of the claims and specifications of the present application. Especially, as long as there is no structural conflict, the various technical features mentioned in each embodiment can be combined in any way. The present application is not limited to the specific embodiments disclosed in the specification, but includes all technical solutions falling within the scope of the claims.

## Claims

1. A battery case, comprising:
a frame, provided therein with a mounting channel, wherein the frame is provided with a connecting hole configured to connect interior and exterior of the mounting channel;
a connecting assembly, comprising a connecting main body and a first fixing member; wherein the connecting main body is inserted into the mounting channel, and the first fixing member is fixedly arranged on the connecting main body; and
a second fixing member, connected with the first fixing member by the connecting hole, to fix the battery case to an external structure.

2. The battery case according to claim 1, wherein the frame comprises a frame body and a cap body, the frame body is in a rectangular shape provided with an opening at one end, and the cap body is detachably covered at the opening; and
the frame body comprises four side plates, and the four side plates are connected in an end-to-end manner, at least one of the four side plates is hollow, and at least a part of an inner cavity of the at least one of the four side plates forms the mounting channel.

3. The battery case according to claim 2, wherein an edge of each side plate matched with the cap body is provided with a glue groove, and the glue groove is configured for filling a sealant to seal a gap between the cap body and the frame body.

4. The battery case according to claim 2 or 3, wherein a side plate provided with the mounting channel comprises a first mounting sub-plate located at a top of the side plate facing the opening; and
the connecting hole is arranged on the first mounting sub-plate, and the first mounting sub-plate is constructed as one of channel walls of the mounting channel.

5. The battery case according to any one of claims 2 to 4, wherein each side plate further comprises a first connecting plate, a second connecting plate, and a limiting portion; the first connecting plate and the second connecting plate are connected with opposite sides of the first mounting sub-plate, and the limiting portion protrudes to form a surface facing between the first connecting plate and the second connecting plate, and the limiting portion, the first mounting sub-plate, the first connecting plate, and the second connecting plate are jointly constructed to form the mounting channel.

6. The battery case according to claim 2 or 3, wherein a side plate provided with the mounting channel comprises a second mounting sub-plate located at a bottom of the side plate facing away from the opening; and
the connecting hole is arranged on the second mounting sub-plate, and the second mounting sub-plate is constructed as one of channel walls of the mounting channel.

7. The battery case according to any one of claims 2 to 6, wherein each side plate is hollow and at least a part of the inner cavity of each side plate forms the mounting channel.

8. The battery case according to any one of claims 2 to 7, wherein each side plate is provided with a head and a tail, the head is opposite to the tail in each side plate, each mounting channel is provided with an insertion end and a connection end, and the insertion end and the connection end of each mounting channel are sequentially arranged along an insertion direction; the insertion end is located at the head of the side plate where the insertion end is located, and the connection end is located at the tail of the side plate where the connection end is located; and
when two adjacent side plates are jointed, the connection end of one of the two adjacent side plates is abutted against an outer surface of the insertion end of other one of the two adjacent side plates, and the insertion end is maintained to be exposed.

9. The battery case according to any one of claims 2 to 8, wherein the mounting channel is provided with a reinforcing plate extended along an insertion direction and is arranged to be parallel to the connecting main body.

10. A battery, comprising the battery case according to any one of claims 1 to 9.

11. An electrical device, comprising a battery according to claim 10, wherein the battery is configured for supplying electrical energy.
